Europäisches Patentamt

European Patent Office

Office européen des brevets

(11) Veröffentlichungsnummer: **0 316 760**
**A2**

## EUROPÄISCHE PATENTANMELDUNG

(21) Anmeldenummer: 88118717.3

(22) Anmeldetag: **10.11.88**

(51) Int. Cl.⁴ **B29C 47/10 , B29C 47/76**

(30) Priorität: **17.11.87 DE 3738976**

(43) Veröffentlichungstag der Anmeldung:
**24.05.89 Patentblatt 89/21**

(84) Benannte Vertragsstaaten:
**AT BE CH DE ES FR GB IT LI LU NL SE**

(71) Anmelder: **BELLAND AG**
**Sandmattstrasse 2**
**CH-4500 Solothurn(CH)**

(72) Erfinder: **Smidek, Otto**
**Rothenbergstrasse 24**
**CH-4132 Muttenz(CH)**
Erfinder: **Belz, Roland**
**Schauenburgstrasse 10 B**
**CH-4514 Lommiswil(CH)**
Erfinder: **Pape, Richard, Dr.,**
**Fliederstrasse 5**
**CH-4563 Gerlafingen(CH)**

(74) Vertreter: **Patentanwälte RUFF, BEIER und**
**SCHÖNDORF**
**Neckarstrasse 50**
**D-7000 Stuttgart 1(DE)**

(54) **Verfahren und Vorrichtung zur Herstellung von thermoplastischen Kunststoffen.**

㉗ Die Erfindung betrifft ein Verfahren und eine Vorrichtung zur Herstellung von thermoplastischen Kunststoffen mit Hilfe von Extrudern. Dabei werden gasförmige Stoffe im wesentlichen vollständig aus einem Reaktionsextruder entfernt, wobei die Entfernung flüchtiger Stoffe im nachfolgenden Extruder im wesentlichen auf kondensierbare Stoffe beschränkt bleibt. Bei der Vorrichtung bewirkt eine zwischen dem Reaktionsextruder und nachfolgenden Behandlungseinheiten angeordnete Zwangsfördereinrichtung eine Abkopplung der Druckverhältnisse und der Förderbedingungen der nachfolgenden Behandlungseinheit vom vorangehenden Reaktionsextruder. Die Erfindung ermöglicht einen ungestörten Strom der Materialschmelze durch die gesamte Vorrichtung.

Fig. 1

EP 0 316 760 A2

## Verfahren und Vorrichtung zur Herstellung von thermoplastischen Kunststoffen

Die Erfindung betrifft ein Verfahren zur Herstellung von thermoplastischen Kunststoffen, insbesondere durch Polymerisation, bei dem Ausgangsmaterialien unter gegenseitiger Reaktion durch mindestens einen Reaktionsextruder gefördert werden, dessen Ausgangsseite über eine Schmelzeleitung mit mindestens einer nachfolgenden Behandlungseinheit, insbesondere einem Extruder verbunden ist, wobei während der Förderung an mindestens einer Stelle flüchtige Stoffe entfernt werden, sowie eine Vorrichtung zur Durchführung des Verfahrens.

Eine aus der deutschen Offenlegungsschrift 33 35 954 bekannte Apparatur zur Durchführung von exothermen Polymerisationsreaktionen bei Temperaturen ab ca. 60 °C besteht aus einem Polymerisationsreaktor bzw. Polymerisationsextruder, zum Beispiel in Form eines Doppelschnecken-Extruders, der über eine als Schmelzeleitung dienende Rohrleitung zur Einspeisung des Reaktionsgemisches in die Eintrittszone eines nachfolgenden Extruders mit diesem verbunden ist. Der Reaktionsextruder wird auf die jeweilige Reaktionstemperatur gebracht und bei exothermen Reaktionen ggf. gekühlt. Der nachfolgende Extruder dient vorwiegend als Entgasungsextruder sowie zur Compoundierung der im Reaktionsextruder hergestellten Kunststoffe durch Zugabe von Füllstoffen, Stabilisatoren und dergleichen. Der Förderweg durch die Extruder kann insbesondere vor einer Destillationseinrichtung mit Querschnittsverengungen bzw. Drosseleinrichtungen versehen sein, die es ermöglichen, die Destillationseinrichtung unter vermindertem Druck zu betreiben, ohne daß dabei durch den verminderten Druck Material aus der vorangehenden Förderstrecke eingezogen wird.

Im Betrieb hat sich gezeigt, daß Unregelmäßigkeiten in der Förderung das Verfahren, insbesondere seine gleichmäßige Durchführung belasten können. Es wurden Pulsierungen im Materialstrom festgestellt, die zu einem unregelmäßigen Ausstoß des Endproduktes und auch zu einem schwankenden Restmonomergehalt führen können.

Der Erfindung liegt daher die Aufgabe zugrunde, den Produktstrom bzw. den Schmelzefluß gleichmäßiger zu gestalten.

Die Erfindung ist dadurch gekennzeichnet, daß die Förderung der Schmelze in den nachfolgenden Behandlungsabschnitt unabhängig von im Reaktionsextruder vorhandenen Druck mittels einer Zwangsfördereinrichtung vorgenommen wird. Dadurch ist eine Abkopplung der Druckverhältnisse ohne Unterbrechung des Schmelzestromes möglich. Unter den Arbeitsbedingungen im Reaktionsextruder in gasförmigem Zustand vorliegende Stoffe können getrennt von der Schmelze mindestens zum überwiegenden Teil, vorzugsweise im wesentlichen vollständig, aus dem Reaktionsextruder entfernt werden. Sie können somit nicht mehr in den nachfolgenden Extruder gelangen. Der Abzug weiterer flüchtiger Stoffe im nachfolgenden Extruder bleibt somit im wesentlichen auf verdampfbare, insbesondere kondensierbare Stoffe beschränkt.

Bei den gasförmigen Stoffen handelt es sich vorwiegend um Stickstoff, der beim Spülen von Reaktionsmedien und Reaktionseinrichtungen verwendet wird und in den Reaktionsextruder gelangt oder beim Zerfall von Katalysatoren gebildet werden kann; weiterhin um Kohlendioxid, Methan und dergleichen, die als gasförmige Spaltprodukte bei der Reaktion entstehen können. Werden nur die gasförmigen, d.h. die in der Reaktionsmasse nicht gelösten flüchtigen Bestandteile bereits aus dem ersten Reaktionsextruder entfernt, dann wird eine Beruhigung des Materialstroms im nachfolgenden Extruder erhalten, auch wenn der Materialstrom noch weitere flüchtige Bestandteile enthält. Diese können bei Betrieb eines nachfolgenden Extruders oder in mindestens einer Verdampfungseinheit bei vermindertem Druck, insbesondere im Vakuum, aus dem Materialstrom entfernt werden.

Die gasförmigen Stoffe werden mit Vorteil mindestens eine Teilstrecke entgegen der Förderrichtung des Reaktionsextruders zurückströmen, bevor sie aus diesem entfernt werden. Vorzugsweise läßt man die gasförmigen Stoffe bis zum Anfang des Reaktionsextruders zurückströmen, wo sie zweckmäßigerweise im wesentlichen drucklos abgelassen werden. Eine Rückwärtsströmung von gasförmigen Stoffen entgegen der Förderrichtung des Materialstromes ist auch bei dichtkämmenden Zwei-Schneckenextrudern möglich. Mit besonderem Vorteil wird der Reaktionsextruder mindestens über die Hälfte seiner Förderstrecke, vorzugsweise im wesentlichen über seine gesamte Länge mit maximaler Füllung an flüssigem bzw. geschmolzenem Material betrieben, wobei der Materialdruck vorzugsweise entgegen der Förderrichtung von der Ausgangsseite des Reaktionsextruders in Richtung zur Eingangsseite abnimmt. Dies ist ein besonders vorteilhafter Weg, die gasförmigen Stoffe rückwärts aus dem Reaktionsextruder zu pressen. An der im wesentlichen drucklos betriebenen Eingangsseite des Reaktionsextruders können die gasförmigen Stoffe abgelassen werden, ohne daß besondere Vorkehrungen zu treffen sind, um ein Austreten von Reaktionsmasse oder ein Entweichen von Momomeren zu verhindern. Ein Entfernen der Gase bei Betreiben des Reaktionsextruders mit Teilfüllung ist ebenfalls möglich.

Beim erfindungsgemäßen Verfahren wird die Materialschmelze durch eine Zwangsförderung in den nachfolgenden Behandlungsabschnitt befördert, wobei die Förderleistung dieser Zwangsförderung von der Förderleistung des Reaktionsextruders unabhängig ist, z.B. geringer ist als die des Reaktionsextruders. Durch diese Zwangsförderung werden voneinander unabhängige Wirkungen erzielt, die sich gegenseitig günstig beeinflussen. Zum einen wird durch die Zwangsförderung eine Abkopplung der Förderungsverhältnisse z.B. in einem nachfolgenden Extruder von denen im Reaktionsextruder erreicht. So können sich etwaige Druckschwankungen im Reaktionsextruder nicht in die nachfolgenden Behandlungsabschnitte fortsetzen, was bei den bisher verwendeten Drosseleinrichtungen der Fall war. Zum anderen kann die Zwangsförderung, insbesondere dann, wenn sie mit geringerer Förderleistung betrieben wird als die des Reaktionsextruders, dazu ausgenutzt werden, einen Druckstau im Reaktionsextruder aufzubauen und eine vollständige Füllung des Reaktionsextruders zumindest in seinem Endbereich zu bewirken. Dadurch können Drosselungen im Reaktionsextruder weggelassen werden.

Hinter der Zwangsfördereinrichtung kann der Druck demgegenüber wesentlich geringer sein. Es kann die Schmelze, insbesondere zur Entfernung flüchtiger Stoffe, unter vermindertem Druck weitergefördert werden.

Flüchtige, im Reaktionsmedium enthaltene Stoffe, wie Lösungsmittel, Restmonomere und dergleichen, die erst bei vermindertem Druck (Vakuum) in den gasförmigen bzw. dampfförmigen Zustand übergehen, können im nachfolgenden Extruder entfernt werden. Hierzu sind vorzugsweise mehrere Abzugs- bzw. Destillationseinrichtungen vorgesehen, wobei zumindest die erste Abzugseinrichtung vorzugsweise als Expander ausgebildet ist und ein gleichzeitiges Entschäumen des Materialstromes ermöglicht.

Es ist auch möglich, die flüchtigen bzw. verdampfbaren Stoffe in besonders dazu eingerichteten Behandlungseinheiten zu entfernen, die von einem etwa nachfolgenden Extruder unabhängig sind. So kann als Behandlungseinheit mindestens ein gesonderter Dünnschichtverdampfer vorgesehen sein. Die einzelnen Behandlungseinheiten sind vorzugsweise jeweils durch Zwangsfördereinrichtungen voneinander getrennt.

Das erfindungsgemäße Verfahren wird vorzugsweise zur Durchführung exothermer Polymerisationsreaktionen bei mindestens 60 °C, insbesondere ca. 80 bis 130 °C angewendet. Hierbei werden Mischungen von Monomeren und ggf. Oligomeren, Lösungsmitteln, Initiatoren, Additiven und dergleichen vorteilhafterweise in eine gekühlte Eintrittszone des Reaktionsextruders eingespeist und im Extruder unter Druck polymerisiert, wobei gleichzeitig die Gase entfernt werden. Die Reaktionsmasse wird dann über die Zwangsförderung in die nachfolgende Behandlungseinheit, insbesondere in den nachfolgenden Extruder geleitet, in der die weiteren flüchtigen Substanzen, insbesondere Restmonomere, Oligomere und Lösungsmitteldämpfe, entfernt und nach Kondensation rezirkuliert werden können. Das Polymerisat kann in nachfolgenden Behandlungseinheiten bei zunehmend verminderndem Druck und zunehmend erhöhter Temperatur (je nach Art des Polymerisats Endtemperatur 180 bis 220 °C) von flüchtigen Stoffen befreit werden, so daß ein monomerfreies Polymerisat zum Beispiel als Strang, Folie und dergleichen ausgetragen werden kann.

Die Vorrichtung zur Durchführung des erfindungsgemäßen Verfahrens umfaßt mindestens einen Reaktionsextruder, der über eine Schmelzeleitung mit mindestens einer nachfolgenden Behandlungseinheit, insbesondere einem Extruder verbunden ist. Die Vorrichtung ist dadurch gekennzeichnet, daß zwischen dem Ausgang des Reaktionsextruders und dem Eingang der nachfolgenden Behandlungseinheit eine Zwangsfördereinrichtung vorgesehen ist. Die Förderleistung der Zwangsfördereinrichtung ist mit Vorteil einstellbar, insbesondere regelbar. Dabei wird die Förderleistung der Zwangsfördereinrichtung, insbesondere wenn durch sie ein Rückstau im Reaktionsextruder aufgebaut werden soll, vorzugsweise geringer eingestellt als die Förderleistung des Reaktionsextruders, so daß die Schnecke bzw. die Schnecken des Reaktionsextruders einen Druckaufbau im Reaktionsextruder und eine weitgehende Befüllung des Reaktionsraumes des Reaktionsextruders herbeiführen können. Durch die Zwangsfördereinrichtung kann der Reaktionsextruder im Aufbau vereinfacht werden. Besondere Verengungen im Extruder oder Verengungen am Extruderausgang sind nicht erforderlich. Die Zwangsförderungseinrichtung ist vorzugsweise unmittelbar am Ausgang des Reaktionsextruders angeordnet. Sie kann auch ein Teil der Schmelzeleitung zwischen beiden Behandlungseinheiten sein.

Als Zwangsfördereinrichtung ist eine solche Fördereinrichtung vorgesehen, deren Förderleistung unabhängig vom Materialdruck an der Eingangsseite der Fördereinrichtung ist. Als Zwangsfördereinrichtung kann eine Zwangsförderpumpe, insbesondere eine kontinuierlich arbeitende Dosierpumpe verwendet werden, wie beispielsweise eine Zahnradpumpe.

Der Reaktionsextruder kann mindestens eine Gasauslaßstelle aufweisen, durch die gasförmige Stoffe aus diesem entfernt werden, ohne in eine nachfolgende Behandlungseinheit zu gelangen. Die nachfolgenden Behandlungseinheiten sind, wie bereits erwähnt, vorzugsweise zur Entfernung von flüchtigen Bestandteilen und zur Zugabe und Einmischung von Additiven eingerichtet. Für die stufenweise Entfernung flüchtiger Stoffe sind vorzugsweise mehrere Abzugseinrichtungen vorgesehen. Die erste Abzugsseinrichtung kann bei Normaldruck oder bereits bei Unterdruck betrieben werden, wobei ein Unterdruck bevorzugt ist. Die nachfolgenden Abzugseinrichtungen werden dann mit zunehmend vermindertem Druck betrieben. Es sind mit Vorteil mindestens eine bis drei weitere Abzugseinrichtungen nachfolgend an die erste Abzugseinrichtung vorgesehen. Den Abzugseinrichtungen können gemeinsame oder getrennte Kondensatoren zugeordnet sein.

Im Bereich der Eingangsstelle des nachfolgenden Extruders ist an diesem mit Vorteil ein Expander vorgesehen, der ebenfalls als Abzugsvorrichtung ausgebildet sein kann. Durch einen solchen im Volumen ausreichend groß bemessenen Expander ist eine gute Trennung zwischen der flüssigen Reaktionsmasse und den flüchtigen Stoffen möglich, ohne daß Reaktionsmasse versehentlich mit übergeht. Der Expander kann weiterhin als Schmelzepuffer dienen. Die weiteren Abzugseinrichtungen können dann an den nachfolgenden Zonen des zweiten Extruders vorgesehen sein.

Als Abzugseinrichtungen können auch getrennte Vorrichtungen insbesondere Dünnschichtverdampfer vorgesehen sein, denen vorzugsweise jeweils Zwangsförderpumpen vorgeschaltet sind. Diese getrennten Abzugseinrichtungen sind vorzugsweise zwischen dem ersten und dem zweiten Extruder angeordnet. Der zweite Extruder hat dann im wesentlichen nur noch die Funktion der Einmischung von Additiven und kann deshalb entsprechend kürzer gebaut sein. Die einzelnen Zwangsförderpum pen sind vorzugsweise jeweils gleich ausgebildet. Die Pumpen, Leitungen und ggf. getrennten Abzugseinrichtungen sind vorzugsweise beheizbar.

Weitere Merkmale und Vorteile der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich allein oder zu mehreren in Kombination miteinander verwirklicht sein.

In der Zeichnung zeigen:

Fig. 1 einen schematischen Aufbau einer Ausführungsform der erfindungsgemäßen Vorrichtung zur Herstellung von thermoplastischen Kunststoffen;

Fig. 2 eine im Vergleich zur Darstellung nach Fig. 1 vergrößerte Darstellung der Abzugseinrichtung mit Expander nach Fig. 1; und

Fig. 3 eine im Vergleich zu Fig. 1 erweiterte Ausführungsform.

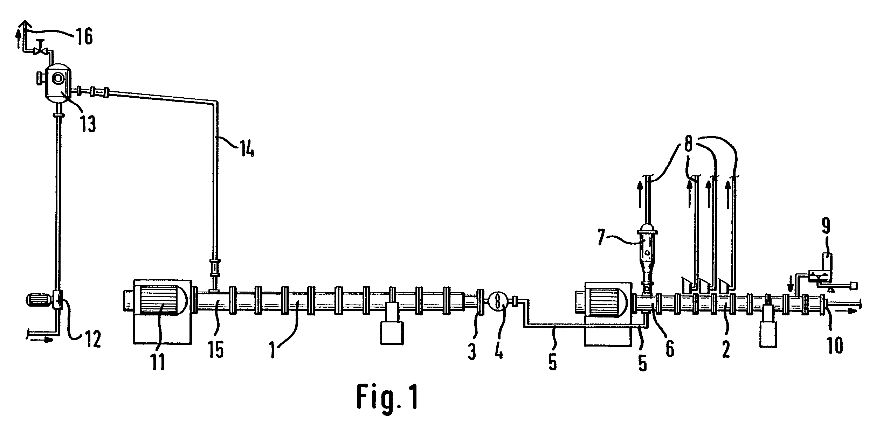

Die in der Zeichnung nach Fig. 1 dargestellte Vorrichtung zur Herstellung von thermoplastischen Kunststoffen entspricht in ihrem grundsätzlichen Aufbau der in der deutschen Offenlegungsschrift 33 35 954 beschriebenen Vorrichtung. Es wird deshalb auf diese Offenlegungsschrift Bezug genommen. Insbesondere handelt es sich um die Vorrichtung, bei der zwei Extruder in Kaskadenschaltung nacheinander angeordnet und über eine Schmelzeleitung miteinander verbunden sind.

Ein erster Extruder, ein sog. Reaktionsextruder 1 ist in an sich bekannter Weise als Zwei-Schnecken-Extruder ausgebildet, bei dem die beiden Schnecken dicht kämmen und in gleicher Drehrichtung rotieren. Der zweite Extruder 2, d.h. der nachfolgende auch als Compoundierungsextruder zu bezeichnende Extruder 2, hat die gleiche Bauart. Er kann jedoch einen kleineren Durchgangsquerschnitt aufweisen und auch kürzer gebaut sein als der Reaktionsextruder 1. Das Ausgangsende 3 des Reaktionsextruders 1 ist mit einer als Zwangsfördereinrichtung dienenden Zahnradpumpe 4 und über eine sich daran anschließende Schmelzeleitung 5 mit der Eingangsseite 6 des Compoundierungsextruders 2 verbunden. Am Eingangsbereich, d.h. in der ersten Zone des Compoundierungsextruders ist eine erste Abzugseinrichtung 7 vorgesehen, die gleichzeitig als Expander dient, worauf noch näher eingegangen wird. In den nachfolgenden Zonen sind weiter Abzugsrohre 8 zur Entfernung flüchtiger Bestandteile vorgesehen. Die Abzugseinrichtungen können jeweils als Destilliereinrichtungen ausgebildet sein. Es ist möglich, die kondensierbaren Stoffe des Expanders 7 und der Abzugsrohre 8 zusammenzufassen und einem gemeinsamen (nicht dargestellten) Kondensator zuzuleiten. Die kondensierbaren Stoffe (Restmonomere und Lösungsmittel) können rückgeführt und dem Reaktionsextruder zusammen mit dem Monomergemisch wieder zugeleitet werden. Im Anschluß an die Entgasungsrohre 8 können weitere Zonen mit Eingangsstutzen zur Zudosierung von Additiven und Füllstoffen ausgerüstet sein, deren Zugabe bei 9 schematisch dargestellt ist. Am Ausgangsende 10 des Compoundierungsextruders 2 kann das fertige Polymerisat in Form eines Stranges, eines Profils, einer Folie oder dergleichen extrudiert werden.

Im Gegensatz zu dem aus der deutschen Offenlegungsschrift 33 35 954 bekannten Extruder benötigt der Reaktionsextruder nach der vorliegenden Ausführungsform keine Restriktionen oder sonstigen als Drossel wirkenden Verengungen. Diese sind durch die unabhängig vom Antrieb 11 des Reaktionsextruders 1 regelbar angetriebene Zwangsfördereinrichtung in Form einer Zahnradpumpe 4 ersetzt. Das zur Herstellung des thermoplastischen Polymerisats verwendete Monomergemisch wird bei 1 mit Hilfe einer Pumpe 12 zugeführt und fließt über ein Entgasungsgefäß 13 und über eine Zuleitung 14 in die erste Zone 15 des Reaktionsextruders. Der Reaktionsextruder kann mit maximaler Füllung an Reaktionsmischung betrieben werden, wobei sich mit zunehmender Reaktion und Viskositätserhöhung des Reaktionsgemisches der Druck in Förderrichtung zunehmend aufbaut, was darauf zurückzuführen ist, daß die Pumpe 4 weniger Polymerisatschmelze entnimmt, als der Zwei-Schnecken-Extruder zu fördern vermag. Infolge des Druckstaus im Reaktionsextruder entweichen mitgeführte und gebildete Gase entgegen der Förderrichtung des Reaktionsextruders aus der ersten Zone 15 im Gegenstrom zum Monomerengemisch durch die ausreichend weit bemessene Zuführleitung 14 in das Entgasungsgefäß 13 und aus diesem durch eine Entgasungsleitung 16. Es ist aber auch möglich, das Monomergemisch getrennt, zum Beispiel von unten her, in die erste Zone zuzudosieren und das zurückgepreßte Gas nach oben entweichen zu lassen. Dies ist besonders dann vorteilhaft, wenn die entweichenden Gase nur wenig oder keine Monomere enthalten. Gegebenenfalls kann auch eine Kühlfalle zur Rückführung mitgeführter Monomere vorgesehen sein.

Durch das Entfernen der gasförmigen Stoffe steht an der Eingangsseite der Zwangsfördereinrichtung 4 eine von Gaseinschlüssen weitgehend freie Polymerschmelze zur Verfügung. Dadurch wird verhindert, daß Gase in unerwünschtem Maße durch die Pumpe hindurch in die Schmelzeleitung gelangen. Es ist aber auch möglich, den Reaktionsextruder nur mit Teilfüllung im wesentlichen drucklos zu betreiben. Die Gase können dann ebenfalls entgegen der Fördereinrichtung entweichen.

Durch die Zwangsfördereinrichtung 4 wird eine vollständige Trennung der Schmelzströme zwischen Reaktionsextruder 1 und Compoundierungsextruder 2 erhalten. Fördergeschwindigkeit und Förderdruck richten sich somit ausschließlich nach den Förderbedingungen der Zwangsfördereinrichtung 4 und des Compoundierungsextruders. Dabei werden die Zwangsfördereinrichtung 4 und die Fördergeschwindigkeit der Schnecken des Compoundierungsextruders 2 so aufeinander abgestimmt, daß in der Schmelzeleitung 5 Umgebungsdruck oder ein verminderter Druck herrscht. Dieser kann beispielsweise 0,5 bis 0,8 bar (absolut) betragen. In der ersten Zone 6 des Compoundierungsextruders 2 ist demgegenüber der Druck noch weiter vermindert, was zu einer Verdampfung von flüchtigen Stoffen und ggf. zu einem gewissen Aufschäumen der Polymerschmelze führt. Der Schaum kann sich im Expander der ersten Abzugseinrichtung 7 ausdehnen und zerfallen. In den nachfolgenden Zonen kann der Druck dann stufenweise oder kontinuierlich bis auf einige mbar (absolut) gesenkt werden.

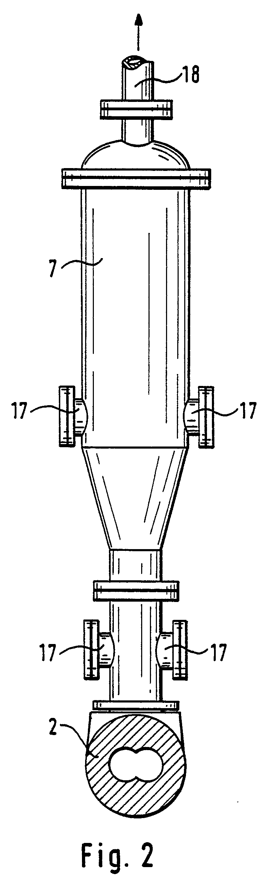

Die in Fig. 2 dargestellte Abzugseinrichtung 7 mit Expander ist auf der ersten Zone 6 des im Querschnitt gezeigten Compoundierungsextruders angeflanscht. Der Expander 7 weist seitliche Schau- bzw. Lichtgläser 17 auf und ist außerdem mit einer Niveau-Überwachungssonde (nicht dargestellt) ausgerüstet. Über eine Regelung des Vakuums kann somit das Niveau des Schmelzenschaumes reguliert werden. Die verdampften bzw. frei gewordenen Stoffe entweichen am oberen Ende über eine Abzugsleitung 18 zu einer Kondensiereinrichtung.

Durch die Abzugseinrichtung 7 mit Expander ist eine schnelle Freisetzung der in der Schmelze enthaltenen flüchtigen Stoffe möglich. Die restliche "Entgasung" kann dann bei stark vermindertem Druck in den nachfolgenden Zonen vorgenommen werden.

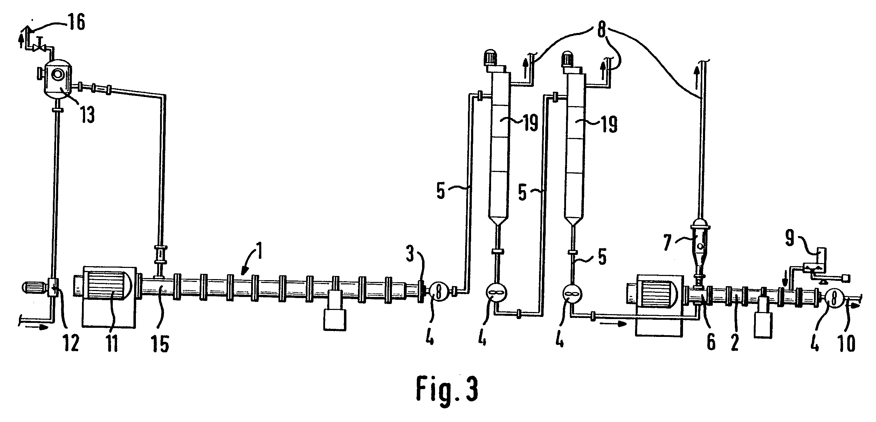

Bei der in Fig. 3 dargestellten Ausführungsform der Erfindung sind dem Reaktionsextruder 1 als weitere Behandlungseinheiten 2 Dünnschichtverdampfer 19 nachgeschaltet und dem zweiten Extruder 2, dem Compoundierungsextruder, vorgeschaltet. Zwischen jeder Behandlungseinheit, d.h. zwischen dem Reaktionsextruder 1 und dem ersten Dünnschichtverdampfer 19 sowie zwischen den beiden Dünnschichtverdampfern 19 und zwischen dem zweiten Dünnschichtverdampfer 19 und dem zweiten Extruder 2 ist jeweils eine Pumpe 4 als Zwangsfördereinrichtung vorgesehen. Dadurch können die Druckverhältnisse in den jeweiligen Behandlungseinheiten beliebig gewählt werden, ohne daß Auswirkungen oder nachteilige Beeinflussungen auf die vorhergehenden oder nachfolgenden Behandlungseinheiten zu befürchten sind. Die Dünnschichtverdampfer 19 werden unter vermindertem Druck (Vakuum) betrieben. Hierzu wird die Schmelze durch die vorangehende Schmelzepumpe 4 und die vorangehende Schmelzeleitung 5 in den oberen Bereich des Dünnschichtverdampfers gepumpt und dort gleichmäßig an der Innenwand des Verdampfers verteilt, wo sie vorzugsweise unter ständiger Erneuerung der Oberfläche mit Hilfe von Rührern bzw. Abstreifern nach unten gelangt. Durch die Entfernung flüchtiger Stoffe mit Hilfe der Dünnschichtverdampfer kann der Restmonomergehalt außerordentlich stark verringert werden.

Im zweiten Extruder 2 sind dementsprechend keine besonderen Abzugseinrichtungen mehr vorgesehen, wie dies bei der Ausführungsform nach Fig. 1 der Fall ist, da die Schmelze ja bereits frei von flüchtigen Stoffen in die Eingangszone 6 des zweiten Extruders 2 eintritt. Trotzdem ist hier in der Eingangszone ein Expander 7 vorgesehen. Dieser hat allerdings eine andere Aufgabe als in der Ausführungsform nach Fig. 1. Es kann nämlich zweckmäßig werden, den Expander 7 als Vorratsbehälter bzw. Puffer für Schmelze zu verwenden. Dies ist beispielsweise dann interessant, wenn im zweiten Extruder sehr viele Zuschlagstoffe zugegeben werden, die ein zusätzliches Volumen bringen, der Ausstoß des zweiten Extruders jedoch zumindest vorübergehend nicht verändert werden soll. In ähnlicher Weise können auch die Dünnschichtverdampfer 19 in ihrem unteren Bereich als Puffer- bzw. Vorratsbehälter dienen. Zweckmäßigerweise sind sämtliche Zwangsfördereinrichtungen 4 sowie die Dünnschichtverdampfer 17 und ggf. auch die Schmelzeleitungen 5 mit entsprechenden Beheizungen versehen, um das gewünschte Temperaturniveau aufrecht erhalten zu können.

Bei der Ausführungsform nach Fig. 3 ist am Ende des zweiten Extruders 2 ebenfalls noch eine Zwangsfördereinrichtung 4 in Form einer Zahnradpumpe vorgesehen. Durch diese Zwangsfördereinrichtung kann der Ausstoß des Polymerisats wiederum unabhängig von den Druckverhältnissen im zweiten Extruder geregelt werden. Dies eröffnet umgekehrt die Möglichkeit, im zweiten Extruder auch mit vermindertem Druck zu arbeiten, da die Pumpe 4 am Ende des zweiten Extruders 2 den notwendigen Austragedruck zur Formung der thermoplastischen Polymere selbständig aufbaut.

Die erfindungsgemäße Vorrichtung kann weiterhin noch die bekannten Meß- und Überwachungsinstrumente sowie Temperierungseinrichtungen für die einzelnen Zonen enthalten und kann mit Hilfe eines Prozeßleitsystemes vollautomatisch gesteuert und geregelt werden.

Durch die erreichte gleichmäßige Förderung wird eine kontinuierliche Herstellung von Polymeren in Form eines gleichmäßigen Massestromes erreicht. Dadurch wird eine Erhöhung der Leistung der gesamten Anlage erzielt sowie auch eine Verbesserung der Gleichmäßigkeit der Produkteigenschaften.

Das erfindungsgemäße Verfahren und die erfindungsgemäße Vorrichtung eignen sich besonders zur Herstellung von Copolymerisaten und Terpolymerisaten von Acrylsäure bzw. Metha crylsäure. Bevorzugt sind Copolymerisate mit Estern von Acrylsäure bzw. Methacrylsäure mit niederen (C1 bis C8)-Alkoholen. Die Polymerisation kann in Gegenwart von Lösungsmitteln, wie Alkoholen, Initiatoren und Additiven aller Art durchgeführt werden. So können thermoplastische Polymerisate, wie sie in der deutschen Offenlegungsschrift 34 35 468 beschrieben sind, mit Vorteil hergestellt werden. Beispielsweise kann eine Mischung aus 1 mol Acrylsäure, ca. 3 bis 6 mol Methyl-Ethyl- und/oder Butylacrylat, einem Peroxid als Initiator polymerisiert und gewünschtenfalls mit Additiven (zum Beispiel Pigmenten, Füllern, Gleitmitteln, Stabilisatoren, Lichtschutzmitteln und dergleichen) versetzt werden. Das fertige Polymerisat kann unmittelbar zu einem Strang, einem Profil oder einer Folie verarbeitet oder auch granuliert und dann zu Pulvern, Spritzgußteilen, Dispersionen, Lösungen und dergleichen weiterverarbeitet werden. Aus dem Polymerisat hergestellte Teile, Folien und Beschichtungen, sind gegen Wasser beständig, jedoch in Basen löslich. Die Eigenschaften des Granulats können durch Modifikationen der Verfahrensbedingungen und durch Additive gezielt geändert werden. Durch den gleichförmigen Ablauf der Reaktion und die gleichmäßige Förderung des Produktstromes werden bei der kontinuierlichen Herstellung Produkte mit sehr einheitlichen chemischen und physikalischen Eigenschaften erhalten.

### Beispiel 1

Aus einem nachfüllbaren, auf 15 °C gekühlten Vorratsbehälter, der 400 mol (40 kg) Ethylacrylat, 100 mol (17,2 kg) Methacrylsäure, 0,5 % TRIGONOX 21 S (tertiär-Butylperoxy-2-ethylhexonat) enthielt, wurden 100 kg/h Monomergemisch in die Einfüllzone des Reaktionsextruders gepumpt. Die Einfüllzone besaß eine Temperatur von 90 °C, die restlichen Zonen des Reaktors waren auf 110 °C temperiert. Die Reaktordrehzahl betrug 30/min, die Stromaufnahme lag bei 7 A.

Die im Reaktionsextruder entstandene Polymerschmelze wurde durch eine am Ausgangsende des Reaktionsextruders angeordnete Schmelzepumpe mit Zwangsförderung gestaut, indem die Förderleistung des Reaktionsextruders höher eingestellt wurde als die der Schmelzepumpe. Durch den Druckstau im Reaktionsextruder und den dadurch erzielten Füllgrad konnten über 90 % der gesamten anfallenden gasförmigen Stoffe aus dem Reaktionsextruder nach rückwärts ausgepreßt und abgezogen werden. Die von der Schmelzepumpe vom Materialpolster des Reaktionsextruders abgenommene Polymerschmelze wurde über eine Schmelzeleitung in die Eingangszone des nachfolgenden Compoundierungsextruders gefördert. Die Eingangszone stand unter einem Druck von 100 mbar (absolut) bei einer Temperatur von 180 °C. In dieser Eingangszone wurde mit Hilfe der in dieser Zone vorgesehenen Abzugseinrichtung mit Expander die Hauptmenge an flüchtigen Bestandteilen entfernt. Die weiteren "Entgasungszonen" waren auf 200 °C temperiert, wobei der Druck von Zone zu Zone weiter vermindert wurde.

Die in Form von Strängen aus dem Entgasungsextruder austretende Schmelze wurde abgekühlt und granuliert. Das Granulat hatte folgende Eigenschaften: Dichte 1,15 g cm³, Carboxylgehalt: 9,3 %, Schmelzindex: 7,2 g 10 min bei 150 °C. Der Restmonomergehalt betrug 10 ppm.

Diese Werte zeigen bei aus der fortlaufenden Produktion entnommenen Proben praktisch keine Veränderungen. Wird demgegenüber die Polymerisation in herkömmlicher Weise ohne Zwangsfördereinrichtung, d.h. unter Anwendung der bekannten Drosseln bzw. Restriktionen, durchgeführt, deren Durchsatz vom Inreaktionsextruder herrschenden Druck abhängig ist, dann sind Schwankungen im Restmonomergehalt und Abweichungen im Schmelzindex feststellbar, was auf Schwankungen in der Zusammensetzung der Polymere schließen läßt.

Wird anstelle der Abzugsvorrichtungen im Compoundierungsextruder mit getrennten Abzugs- bzw. Abstreifeinrichtungen gearbeitet werden, kann der Compoundierungsextruder entsprechend verkürzt werden. Sind als Abzugseinrichtungen Dünnschichtverdampfer vorgesehen, so kann der Restmonomergehalt sehr stark erniedrigt werden.

## Ansprüche

1. Verfahren zur Herstellung von thermoplastischen Kunststoffen, bei dem Ausgangsmaterialien unter gegenseitiger Reaktion durch mindestens einen Reaktionsextruder gefördert werden, dessen Ausgangsseite über eine Schmelzeleitung mit mindestens einer nachfolgenden Behandlungseinheit, insbesondere einem Extruder verbunden ist, wobei während der Förderung an mindestens einer Stelle flüchtige Stoffe entfernt werden, dadurch gekennzeichnet, daß die Förderung der Schmelze in die nachfolgende Behandlungseinheit unabhängig vom im Reaktionsextruder vorhandenen Druck mittels einer Zwangsfördereinrichtung vorgenommen wird.

2. Verfahren nach Anspruch 1, dadurch gekennzeichnet, daß unter den Arbeitsbedingungen im Reaktionsextruder im gasförmigen Zustand vorliegende Stoffe mindestens zum überwiegenden Teil getrennt von der Schmelze aus dem Reaktionsextruder entfernt werden, indem die gasförmigen Stoffe vorzugsweise mindestens eine Teilstrecke entgegen der Förderrichtung des Reaktionsextruders zurückbefördert werden, bevor sie aus diesem entfernt werden, insbesondere die gasförmigen Stoffe bis zum Anfang des Reaktionsextruders befördert werden und dort vorzugsweise im wesentlichen drucklos abgelassen werden.

3. Verfahren nach einem der vorhergehenden Ansprüche, dadurch gekennzeichnet, daß der Reaktionsextruder mindestens in seinem Endbereich, vorzugsweise im wesentlichen über seine gesamte Länge mit flüssigem bzw. geschmolzenem Material gefüllt ist und der Materialdruck entgegen der Förderrichtung von der Ausgangsseite in Richtung zur Eingangsseite des Reaktors abnimmt.

4. Verfahren nach einem der vorhergehenden Ansprüche, dadurch gekennzeichnet, daß verdampfbare Stoffe unter Vakuum in mindestens einer nachfolgenden Behandlungseinheit aus dem Materialstrom abgezogen werden, insbesondere die Schmelze nach Verlassen des Reaktionsextruders und vor Eintreten in eine nachfolgende Formgebungseinheit, insbesondere einen Compoundierungsextruder, mindestens einer Vakuumbehandlung zur Entfernung flüchtiger Stoffe unterworfen wird, vorzugsweise mittels Dünnschichtverdampfung.

5. Verfahren nach einem der vorhergehenden Ansprüche, dadurch gekennzeichnet, daß die weitere Förderung der Schmelze im Anschluß an eine Behandlungseinheit jeweils durch eine von Druck in der vorhergehenden Behandlungseinheit unabhängige Zwangsfördereinrichtung erfolgt.

6. Vorrichtung zur Durchführung des Verfahrens nach einem der vorhergehenden Ansprüche, dadurch gekennzeichnet, daß mindestens zwischen dem Ausgang (3) des Reaktionsextruders (1) und dem Eingang (6) einer nachfolgenden Behandlungseinheit (2, 19) mindestens eine Zwangsfördereinrichtung (4) vorgesehen ist.

7. Vorrichtung nach Anspruch 6, dadurch gekennzeichnet, daß die Förderleistung der Zwangsfördereinrichtung (4) einstellbar, insbesondere regelbar ist und die Zwangsfördereinrichtung (4) vorzugsweise eine Zwangsförderpumpe, insbesondere eine kontinuierlich arbeitende Dosierpumpe ist.

8. Vorrichtung nach Anspruch 6 oder 7, dadurch gekennzeichnet, daß die Zwangsfördereinrichtung (4) in der Schmelzeleitung (5) angeordnet ist, insbesondere unmittelbar im Anschluß an den Reaktionsextruder (1).

9. Vorrichtung nach einem der Ansprüche 6 bis 8, dadurch gekennzeichnet, daß zum Abzug von flüchtigen Stoffen in einem nachfolgenden Behandlungsabschnitt (6) mindestens eine Abzugseinrichtung (8, 19) für flüchtige Stoffe vorgesehen ist, insbesondere mindestens zwei, vorzugsweise zwei bis vier Einrichtungen (8, 19) zum Abzug flüchtiger Stoffe aufweist, die, in Förderrichtung gesehen, mit jeweils abnehmendem Druck betreibbar sind.

10. Vorrichtung nach einem der Ansprüche 6 bis 9, dadurch gekennzeichnet, daß der nachfolgende Extruder (2) vorzugsweise in seinem Eingangsbereich (6) mit einem Expander (7) versehen ist.

11. Vorrichtung nach Anspruch 9 oder 10, dadurch gekennzeichnet, daß die mindestens eine Einrichtung (8) zum Abzug flüchtiger Stoffe im nachfolgenden Extruder (2) vorgesehen ist, insbesondere nachfolgend an einen Expander (7).

12. Vorrichtung nach einem der Ansprüche 6 bis 11, dadurch gekennzeichnet, daß die mindestens eine Einrichtung (19) zum Abzug flüchtiger Stoffe zwischen dem Reaktionsextruder und einem Compoundierungsextruder vorgesehen ist, insbesondere mindestens ein, vorzugsweise mindestens zwei Dünnschichtverdampfer vorgesehen sind, denen vorzugsweise jeweils eine Zwangsfördereinrichtung (4) vorgeschaltet ist.

13. Vorrichtung nach einem der Ansprüche 6 bis 12, dadurch gekennzeichnet, daß zwischen zwei Behandlungseinheiten (1, 19, 2) in der Schmelzeleitung jeweils eine Zwangsfördereinrichtung (4) vorgesehen ist.

14. Vorrichtung nach einem der Ansprüche 6 bis 13, dadurch gekennzeichnet, daß jeder Behandlungseinheit (1, 19, 2) eine Zwangsfördereinrichtung (4) nachgeschaltet ist.

**Fig. 1**

EP 0 316 760 A2

Fig. 2

**Fig. 3**

EP 0 316 760 A2